# EUROPÄISCHE PATENTSCHRIFT

(11) **EP 3 953 254 B1**
(45) Veröffentlichungstag und Bekanntmachung des Hinweises auf die Patenterteilung: **07.06.2023**
(21) Anmeldenummer: 20708021.9
(22) Anmeldetag: 20.02.2020
(51) Int. Cl.: B64F 1/22

(54) **SYSTEM UND VERFAHREN ZUM BERGEN EINES FLUGZEUGS**
SYSTEM AND METHOD FOR RECOVERING AN AIRCRAFT
SYSTÈME ET PROCÉDÉ DE SAUVETAGE D'UN AÉRONEF

(30) Priorität: 08.04.2019 AT 503082019
(43) Veröffentlichungstag der Anmeldung: 16.02.2022
(73) Patentinhaber: Mühlfellner, Andreas, 8502 Lannach (AT); Mühlfellner, Walter, 8073 Feldkirchen (AT)
(72) Erfinder: Mühlfellner, Andreas, 8502 Lannach (AT); Mühlfellner, Walter, 8073 Feldkirchen (AT)
(74) Vertreter: Schwarz & Partner Patentanwälte GmbH
(86) Internationale Anmeldenummer: PCT/AT2020/060049
(87) Internationale Veröffentlichungsnummer: WO 2020/206473

(56) Entgegenhaltungen:
- WO-A1-89/08051
- WO-A1-98/25822
- GB-A- 520 051
- GB-A- 2 175 550
- US-A- 2 349 251

## Beschreibung

Die Erfindung betrifft ein System zum Bergen eines Flugzeugs mit zumindest einem Bergewagen, welcher eine Transportfläche zur Aufnahme eines Fahrwerks des Flugzeugs aufweist.

Des Weiteren betrifft die Erfindung ein Verfahren zum Bergen eines Flugzeugs.

Im Luftverkehr besteht bei jeder Landung eines Flugzeugs das Risiko, dass ein oder mehrere Fahrwerke des Flugzeugs beschädigt werden. Wird ein Reifen eines der Fahrwerke im Zuge der Landung beispielsweise durch auf der Landebahn befindliche Objekte getroffen, oder wird die maximale Belastung des Reifens durch ein zu abruptes Aufsetzen des Flugzeugs auf der Landebahn überschritten, führt dies in der Regel zu einem Platzen des Reifens. Infolgedessen fährt das Flugzeug auf der Felge des beschädigten Reifens, wodurch diese ebenfalls mehr oder weniger stark beschädigt wird. Auch bei Notlandungen auf unbefestigtem Untergrund besteht ein hohes Risiko, dass ein oder mehrere Reifen eines oder mehrerer Fahrwerke des Flugzeugs den hierbei auftretenden Belastungen nicht standhalten und versagen. Infolgedessen verbleibt das verunfallte Flugzeug an der Unfallstelle und kann aufgrund des beschädigten Fahrwerks nicht mehr wie üblich abgeschleppt werden. Dies führt dazu, dass der Luftverkehr beeinträchtigt wird, da zumindest jene Landebahn auf welcher, oder in deren Umgebung, das beschädigte Flugzeug zum Stillstand gekommen ist bis zu dessen Abtransport nicht mehr verwendet werden kann.

Im Stand der Technik sind für den Abtransport von verunfallten Flugzeugen unterschiedliche Vorrichtungen bekannt (siehe z.B. das Dokument GB2175550). In der Regel werden Flugzeuge mit beschädigten Fahrwerken mit sogenannten Bergewagen abtransportiert, welche die Funktion des beschädigten Fahrwerks übernehmen. Hierzu ist es notwendig das beschädigte Fahrwerk auf dem Bergewagen zu positionieren. Die Bergewagen weisen eine Rampe auf, über welche das Fahrwerk mit den beschädigten Rädern gezogen oder geschoben werden muss. In Folge der Beschädigungen an dem Fahrwerk ist die Rollfunktion der Räder in der Regel nicht mehr oder nur mehr in eingeschränkten Umfang gegeben, wodurch diese Positionierung einen komplexen Vorgang darstellt, und mit einem großen mechanischen Aufwand verbunden ist. Zudem können Fahrwerke mit geplatzten Reifen oder mit beschädigten beziehungsweise blockierten Rädern nicht auf den Bergewagen gezogen werden und müssen zuvor mit einem Wagenheber für Flugzeugfahrwerke angehoben werden. Versagen die Reifen an einem Fahrwerk führt dies dazu, dass im Stand der Technik bekannte Wagenhebern für Flugzeugfahrwerke nicht eingesetzt werden können, da ein hierfür notweniger Mindestabstand zwischen einem an dem Fahrwerk vorgesehenen Hebepunkt und dem Untergrund unter dem Fahrwerk unterschritten wird.

Es ist somit die Aufgabe der vorliegenden Erfindung ein System und ein Verfahren zum Bergen eines Flugzeugs zu bilden, welche die Nachteile des Standes der Technik vermeiden.

Erfindungsgemäß wird die vorliegende Aufgabe dadurch gelöst, dass das System zumindest eine Achsanhebevorrichtung, zumindest eine Verschubplatte und zumindest einen Schlitten umfasst, wobei die Achsanhebevorrichtung zumindest ein anhebbares und absenkbares Lagerelement zur höhenverstellbaren Aufnahme zumindest einer Achse des Fahrwerks aufweist, und die Verschubplatte eine in Betriebslage im Wesentlichen in einer Ebene mit der und anschließend an die Transportfläche des Bergewagens angeordnete Verschubfläche aufweist, wobei der Schlitten zur Aufnahme zumindest eines an der von dem Lagerelement der Achsanhebevorrichtung aufgenommenen Achse angeordneten Rads ausgebildet, und von der Verschubfläche der Verschubplatte auf die Transportfläche des Bergewagens verschiebbar ist.

Das erfindungsgemäße System zum Bergen eines Flugzeugs umfasst zumindest einen Bergewagen mit einer Transportfläche zur Aufnahme eines Fahrwerks des Flugzeugs. Des Weiteren umfasst das System eine Achsanhebevorrichtung, zumindest eine Verschubplatte und zumindest einen Schlitten. Die Achsanhebevorrichtung weist zumindest ein anhebbares und absenkbares Lagerelement zur höhenverstellbaren Aufnahme zumindest einer Achse des Fahrwerks auf. Die Verschubplatte umfasst eine Verschubfläche, welche in Betriebslage im Wesentlichen in einer Ebene mit und anschließend an die Transportfläche des Bergewagens angeordnet ist. Der Schlitten ist zur Aufnahme zumindest eines an der von dem Lagerelement der Achsanhebevorrichtung aufgenommenen Achse angeordneten Rads ausgebildet, und von der Verschubfläche der Verschubplatte auf die Transportfläche verschiebbar.

Das erfindungsgemäße System bietet den Vorteil, dass durch die Verwendung der Achsanhebevorrichtug mit dem Lagerelement, welches an der Achse des Fahrwerks angreift, eine einfache und sichere Möglichkeit bereitgestellt wird das oder die beschädigten Räder des Fahrwerks vom Untergrund anzuheben. Hierdurch wird die Möglichkeit geschaffen die Verschubplatte unter dem oder den beschädigten Reifen zu positionieren, und den Schlitten auf der Verschubfläche der Verschubplatte anzuordnen. Durch die erfindungsgemäße Ausführung des Systems mit der Verschubplatte und dem Schlitten wird zudem eine Höhe um welche das beschädigte Fahrwerk von der Achsanhebvorrichtung angehoben werden muss im Vergleich zur Anwendung von Wagenhebern im Stand der Technik reduziert. Die Verschubfläche der Verschubplatte stellt eine glatte Oberfläche bereit, welche die Reibung mit dem darauf positionierten Schlitten reduziert. Nach dem Ablegen des Rads auf dem Schlitten durch die Achsanhebevorrichtung wird hierdurch die notwenige Kraft, welche zur Verschiebung des Schlittens, mit dem von diesem aufgenommenen Rad des Fahrwerks, von der Verschubfläche auf die Transportfläche des Bergewagens notwendig ist, reduziert. Durch die erfindungsgemäße Ausführung des Systems wird zudem der Vorteil erreicht, dass die notwendigen mechanischen Kräfte und das notwendige Ausmaß an Verlagerungen an dem Fahrwerk, welche zur Vorbereitung des beschädigten Flugzeugs für den Abtransport im Vergleich zum Stand der Technik notwendig sind, wesentlich reduziert werden. Hierdurch wird das Verletzungsrisiko für das Bergepersonal reduziert, und ein schnellerer Abtransport des beschädigten Flugzeugs gewährleistet. Dies führt zu einer Kosteneinsparung für den Flughafen, da eine von dem beschädigten Flugzeug belegte Landebahn schneller wieder verfügbar ist. Zudem wird der Treibstoffverbrauch des Flugverkehrs durch die Reduktion von Wartezeiten beim Anflug von Flughäfen reduziert.

Vorzugsweise umfasst das erfindungsgemäße System zumindest einen Unterstellbock zur Aufnahme der Achse des Fahrwerks. Hierdurch wird der Vorteil erreicht, dass die von der Achsanhebevorrichtung angehobene Achse auf dem Unterstellbock zwischengelagert werden kann, und die Achsanhebevorrichtung zur Anhebung einer weiteren Achse zur Verfügung steht.

Gemäß einer bevorzugten Ausführungsform des erfindungsgemäßen Systems umfasst das System eine Arretiervorrichtung zum Arretieren der Verschubplatte an dem Bergewagen in der Betriebslage. Hierdurch wird der Vorteil erreicht, dass beim Verschieben des Schlittens von der Verschubfläche der Verschubplatte auf die Transportfläche des Bergewagens auftretende Belastungen nicht zu einem Auseinanderdriften der Verschubplatte und des Bergewagens führen.

Die Arretiervorrichtung umfasst gemäß der bevorzugten Ausführungsform zumindest einen mit der Verschubplatte und dem Bergewagen verbundenen Seilzug. Hierdurch wird der Vorteil erreicht, dass eine Kraft der Verbindung der Verschubplatte mit dem Bergewagen reguliert werden kann.

Das System umfasst vorzugsweise eine mit dem Schlitten verbundene Verschubvorrichtung, wobei die Verschubvorrichtung dazu ausgebildet ist, den Schlitten von der Verschubfläche auf die Transportfläche zu verschieben. Hierdurch wird der Vorteil erreicht, dass ein kontrolliertes Verschieben des Schlittens ermöglicht wird. Die Verschubvorrichtung umfasst vorzugsweise ein mit dem Schlitten verbundenens Seil. In einer besonders bevorzugten Ausfürhungsvariante umfasst die Verschubvorrichtung einen mit dem Schlitten verbundenen Seilzug.

Gemäß einer vorteilhaften Ausführungsvariante ist der Schlitten dazu ausgebildet von der Verschubfläche auf die Transportfläche zu gleiten. Hierdurch wird eine besonders einfache und kostengünstige Methode zur Verlagerung des Fahrwerks auf den Bergewagen bereitgestellt. Gemäß einer alternativen Ausführungsvariante weist der Schlitten Rollen zur Verschiebung des Schlittens von der Verschubfläche auf die Transportfläche auf.

Vorzugsweise umfasst das erfindungsgemäße System zwei Achsanhebevorrichtungen. Hierdurch wird der Vorteil bereitgestellt, dass bei beschädigten Rädern an zwei Achsen eines Fahrwerks die Achsen unabhängig voneinander angehoben werden können, wodurch das Fahrwerk schneller auf den Bergewagen verlagert werden kann.

Gemäß der bevorzugten Ausführungsform des erfindungsgemäßen Systems umfasst das System zumindest eine an dem Schlitten befestigbare Haltevorrichtung zum Fixieren des Rads auf dem Schlitten. Hierdurch wird der Vorteil erreicht, dass das Rad beim Verschieben des Schlittens nicht von dem Schlitten rollen kann. Vorzugsweise umfasst die Haltevorrichtung zumindest einen Unterlegkeil.

Gemäß der bevorzugten Ausführungsform des Systems umfasst das Lagerelement zwei Auflageketten.

Vorzugsweise umfasst die Achsanhebevorrichtung zumindest einen mit dem Lagerelement verbundenen Aktor, welcher dazu ausgebildet ist das Lagerelement anzuheben und abzusenken. Hierdurch wird der Vorteil erreicht, dass das Lagerelement automatisiert angehoben und abgesenkt werden kann. Der Aktor ist vorzugsweise ein Hydraulik- oder Pneumatikzylinder.

Gemäß der bevorzugten Ausführungsvariante umfasst das System zwei Verschubplatten und zwei Schlitten, wobei die Verschubplatten beabstandet voneinander angeordnet sind. Hierdurch wird der Vorteil erreicht, dass auch Flugzeuge mit zwei an einer Achse gegenüberliegend angeordneten beschädigten Rädern geborgen werden können.

In einer vorteilhaften Ausführungsvariante umfasst der Bergewagen eine mit der Transportfläche verbundene Nivelliervorrichtung zum Anheben und Absenken der Transportfläche. Hierdurch wird der Vorteil erreicht, dass das Niveau der Transportfläche an das Niveau der Verschubfläche angepasst werden kann.

Die vorliegende Aufgabe der Erfindung wird des Weiteren durch ein Verfahren zum Bergen eines Flugzeugs umfassend die Schritte
a) Anheben zumindest einer Achse eines Fahrwerks eines Flugzeugs mit der Achsanhebevorrichtung;
b) Positionieren der Verschubplatte unter zumindest einem, an der zumindest einen angehobenen Achse, angeordnetem Rad;
c) Positionieren des Schlittens auf der Verschubfläche der Verschubplatte;
d) Absenken der angehobenen Achse des Fahrwerks und Ablegen des zumindest einen Rads auf den Schlitten mit der Achsanhebevorrichtung; und
e) Verschieben des Schlittens von der Verschubfläche auf die Transportfläche des Bergewagens gelöst.

Das erfindungsgemäße Verfahren bietet den Vorteil, dass die notwendige Arbeitszeit, welcher für die Bergung eines Flugzeugs mit einem beschädigten Fahrwerk notwendig ist, im Vergleich zum Stand der Technik wesentlich reduziert wird. Des Weiteren wird die Sicherheit des Bergungspersonals verbessert.

Gemäß der bevorzugten Ausführungsvariante des erfindungsgemäßen Verfahrens umfasst das Verfahren des Weiteren die Schritte
f) Nach Schritt a) und vor Schritt b):
   Ablegen der angehobenen Achse des Fahrwerks auf den Unterstellbock, und
   Anheben einer weiteren Achse des Fahrwerks des Flugzeugs mit der
   Achsanhebevorrichtung; und
g) Nach Schritt c) und vor Schritt d)
   Absenken der weiteren Achse und Ablegen zumindest eines an der weiteren Achse angeordneten Rads auf den Schlitten, und
   Anheben der auf dem Unterstellbock abgelegten Achse mit der Achsanhebevorrichtung.

Hierdurch wird der Vorteil erreicht, dass mit nur einer Achsanhebevorrichtung ein Flugzeug mit beschädigten Rädern an verschiedenen Achsen mit dem erfindungsgemäßen Verfahren geborgen werden kann.

Vorteilhafte Ausgestaltungen des erfindungsgemäßen Systems und des erfindungsgemäßen Verfahrens werden in weiterer Folge anhand der Figuren näher erläutert.
Figur 1 zeigt ein Fahrwerk eines Flugzeugs, wobei eine Achse des Fahrwerks mit einer Achsanhebevorrichtung eines erfindungsgemäßen Systems angehoben ist.
Figur 2 zeigt das Fahrwerk aus Figur 1, mit der Achsanhebevorrichtung, zwei Schlitten und zwei Verschubplatten des erfindungsgemäßen Systems.
Figur 3 zeigt das Fahrwerk aufgenommen auf den zwei auf jeweils einer Verschubplatte gelagerten Schlitten mit einem Bergewagen des erfindungsgemäßen Systems.
Figur 4 zeigt das Fahrwerk aus Figur 3, wobei die Schlitten von einer Verschubfläche der Verschubplatten auf eine Transportfläche des Bergewagens verschoben wurden.

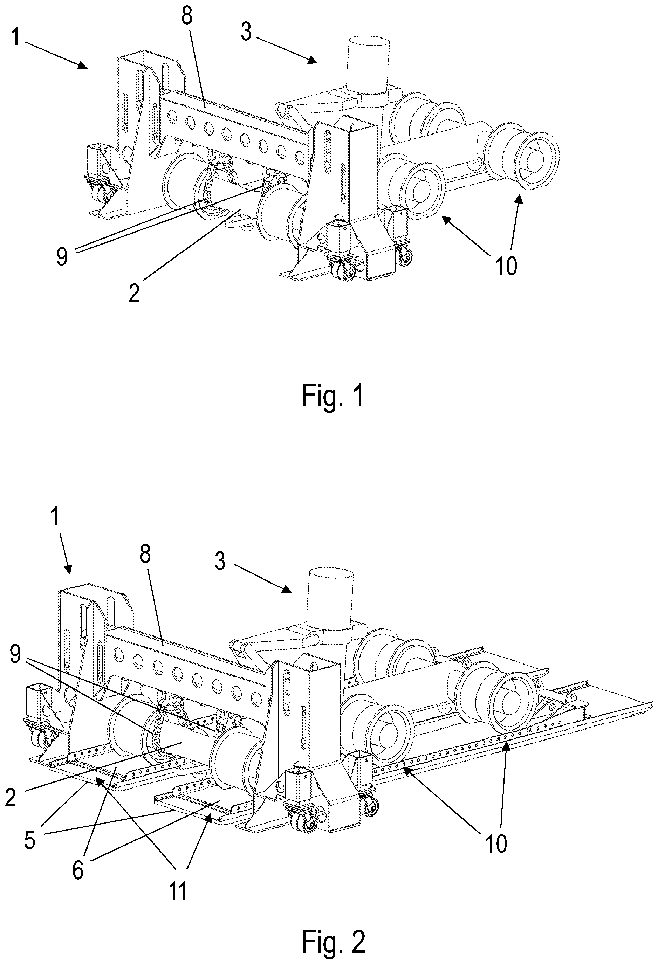

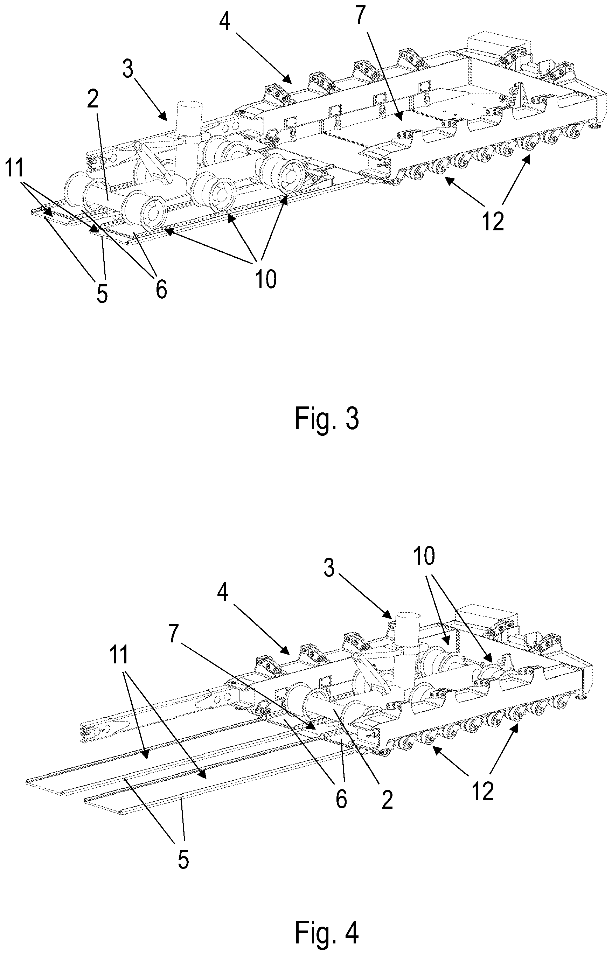

Figur 1 zeigt eine Achsanhebevorrichung 1 eines erfindungsgemäßen Systems zum Bergen eines Flugzeugs, mit einem mittels der Achsanhebevorrichung 1 an einer Achse 2 angehobenem Fahrwerk 3 eines Flugzeuges. Das erfindungsgemäße System umfasst neben der zumindest einen in Figur 1 dargestellten Achsanhebevorrichtung 1 zumindest einen in Figur 3 und Figur 4 dargestellten Bergewagen 4, zumindest eine in Figur 2, Figur 3 und Figur 4 dargestellte Verschubplatte 5 und zumindest einen Schlitten 6, welcher ebenfalls in Figur 2, Figur 3 und Figur 4 dargestellt ist. Der in Figur 3 dargestellte Bergewagen 4 weist eine Transportflüche 7 zur Aufnahme des Fahrwerks 3 des Flugzeugs auf. Wie in Figur 1 gezeigt weist die Achsanhebevorrichtung 1 zumindest ein anhebbares und absenkbares Lagerelement 8 zur höhenverstellbaren Aufnahme zumindest einer Achse 2 des Fahrwerks 3 auf. Gemäß der in Figur 1 dargestellten bevorzugten Ausführungsform des Lagerelements 8 umfasst das Lagerelement 8 zwei Auflageketten 9. Gemäß einer alternativen Ausführungsform kann das Lagerelement 8 Lagergurte umfassen. Hierdurch wird die Last der Achse an einer möglichst großen Auflagefläche aufgenommen, wodurch ein Risiko die Achse zu beschädigen reduziert wird. Die Achsanhebevorrichtung 1 umfasst gemäß der bevorzugten Ausführungsform zudem einen mit dem Lagerelement 8 verbundenen und in den Figuren nicht dargestellten Aktor, welcher dazu ausgebildet ist das Lagerelement 8 anzuheben und abzusenken. Der Aktor ist vorzugsweise ein Hydraulik- oder Pneumatikzylinder. Weitere Aktortypen sind dem Fachmann allgemein bekannt. Hierdurch wird der Vorteil erreicht, dass erprobte, für den benötigten Lastbereich des Systems einfach skalierbare und am Markt weit verbreitete Bauteile für das erfindungsgemäße System verwendet werden können. Alternativ kann das Lagerelement 8 mittels eines mechanischen Höhenverstellmechanimus angehoben und abgesenkt werden.

Figur 2, Figur 3 und Figur 4 zeigen zwei Verschubplatten 5 und zwei Schlitten 6 einer Ausführungsvariante des erfindungsgemäßen Systems, wobei die Verschubplatten 5 beabstandet voneinander angeordnet sind. Gemäß einer alternativen Ausführungsvariante des erfindungsgemäßen Systems sind die zwei Verschubplatten 5 miteinander verbunden. Das System umfasst im Allgemeinen zumindest eine Verschubplatte 5 und zumindest einen Schlitten 6. Sind an zumindest einer Achse 2 des Fahrwerks 3 des Flugzeugs zwei an der Achse 2 gegenüberliegend angeordnete Räder 10 beschädigt kommt das System in der in Figur 2 beziehungsweise Figur 3 gezeigten Konfiguration mit zwei Verschubplatten 5 und zwei Schlitten 6 zum Einsatz. Der Abstand der Verschubplatten 5 entspricht im Wesentlichen einem Abstand von zwei Rädern 10 an einer Achse 2 des Fahrwerks 3. Die Verschubplatte 5 weist eine Verschubfläche 11 auf, wobei die Schlitten 6 auf in dem in Figur 2 und Figur 3 dargestellten Zustand des Systems auf den Verschubflächen 11 der Verschubplatten 5 angeordnet sind. Wie aus Figur 3 und Figur 4 ersichtlich, ist die Verschubfläche 11 in Betriebslage des Systems im Wesentlichen in einer Ebene mit und anschließend an die Transportfläche 7 des Bergewagens 4 angeordnet. Hierdurch wird der Vorteil erreicht, dass ein lückenloser Übergang zwischen der Verschubfläche 11 und der Transportfläche 7 gewährleistet ist. Im Betrieb wird von der Achsanhebevorrichtung 1 die Achse 2 des Fahrwerks 3 an welcher sich ein oder zwei beschädigte Räder 10 befinden angehoben. Im Anschluss wird die Verschubplatte 5 beziehungsweise werden die zwei Verschubplatten 5 unter den beschädigten Rädern 10 des Fahrwerks 3 positioniert. Im Anschluss wird beziehungswesie werden der oder die Schlitten 6 auf den jeweiligen Verschubflächen 11 positioniert. Daraufhin wird das Lagerelement 8 der Achsanhebevorrichtung 1 abgesenkt, wodurch das oder die beschädigten Räder 10 auf den oder die Schlitten 6 abgesenkt werden. Der oder die Schlitten 6 sind zur Aufnahme zumindest eines an der von dem Lagerelement 8 der Achsanhebevorrichtung 1 aufgenommenen Achse 2 angeordneten Rads 10 beziehungsweise Räder 10 ausgebildet. Der beziehungsweise die Schlitten 6 sind von der Verschubfläche 11 der Verschubplatte 5 auf die Transportfläche 7 des Bergewagens 4 verschiebbar, wie aus Figur 3 und Figur 4 ersichtlich ist. Hierdurch wird das Fahrwerk 3 mit den beschädigten Rädern 10 auf den Bergewagen 4 verlagert, welcher, wie in Figur 3 und Figur 4 dargestellt, beispielsweise mit Rollen beziehungsweise Rädern 12 versehen ist, welche einen Abtransport des beschädigten Flugzeugs ermöglichen. Diese sind vorzugsweise um 360 Grad drehbar und fixierbar ausgeführt. Gemäß einer bevorzugten Ausfürhungsvariante des Bergewagens weist der Bergewagen eine in den Figuren nicht dargestellte Nivelliervorrichtung auf, wobei die Nivelliervorrichtung mit der Transportfläche 7 verbunden ist und die Transportfläche bei Bedarf anhebt oder absenkt. Hierdurch wird das Niveau der Transportfläche an das Niveau der Verschubfläche 11 angepasst. Die Nivelliervorrichtung umfasst vorzugsweise zumindest einen Hydraulikzylinder, wobei das Niveau der Transportfläche 7 durch die Nivelliervorrichtung beispielsweise um im Wesentlichen 160mm variierbar ist.

In den in Figur 2 und Figur 3 dargestellten Ausführungsvarianten des erfindungsgemäßen Systems sind jeweils drei, an drei verschiedenen Achsen 2 des Fahrwerks 3 angeordnete Räder 10 von einem Schlitten 6 aufgenommen. Insbesondere bei größeren Abständen zwischen den einzelnen Achsen 2 des Fahrwerks 3 ist es zur Aufnahme von mehr als einem Rad 10 pro Schlitten 6 notwendig einen in den Figuren nicht dargestellten Unterstellbock zur Aufnahme der von der Achsanhebevorrichtung 1 zuerst angehobenen Achse 2 bereitzustellen. Die von der Achsanhebevorrichung 1 angehobene Achse 2 wird hierbei auf dem Unterstellbock zwischengelagert. Anschließend wird eine weitere Achse 2 mittels der Achsanhebevorrichtung 1 angehoben. Hierauf werden ein oder zwei Verschubplatten 5 mit den zugehörigen Schlitten 6 unter den beschädigten Rädern 10 des Fahrwerks 3 angeordnet. In weiterer Folge wird die zuletzt von der Achsanhebevorrichtung 1 angehobene Achse 2 abgesenkt, und die daran angeordneten beschädigten Räder 10 auf den einen oder die zwei Schlitten 6 abgelegt. Im Anschluss wird die auf dem Unterstellbock abgelegte Achse 2 von der Achsanhebevorrichtung 1 von dem Unterstellbock angehoben, der Unterstellbock entfernt, und die daran angeordneten beschädigten Räder 10 ebenfalls auf den einen oder die zwei Schlitten 6 abgelegt. Im Fall von Fahrwerken 3 mit drei oder mehr Achsen 2 mit beschädigten Rädern 10 kann das erfindungsgemäße System auch mehrere Unterstellböcke umfassen. Hierdurch wird der Vorteil erreicht, dass auch Flugzeuge mit Fahrwerken 3, welche an verschiedenen Achsen 2 beschädigte Räder 10 aufweisen mit dem erfindungsgemäßen System geborgen werden können. Gemäß einer alternativen Ausführungsvariante umfasst das erfindungsgemäße System zwei oder mehr Achsanhebevorrichtungen 1. Hierdurch wird der Vorteil erreicht, dass mehrere Achsen 2 des Fahrwerks 3 gleichzeitig angehoben werden können.

Wie in Figur 3 dargestellt weist das System in der bevorzugten Ausführungsform eine oder mehrere in den Figuren nicht dargestellte Arretiervorrichtungen zum Arretieren der Verschubplatte 5 an dem Bergewagen 4 in der Betriebslage auf. Die Arretiervorrichtung ist gemäß der in Figur 3 dargestellten Ausführungsvariante des erfindungsgemäßen Systems als mit der Verschubplatte 5 und dem Bergewagen 4 verbundener Seilzug ausgeführt. Alternative Formen von Arretiervorrichtungen, welche an dem erfindungsgenmäßen System eingesetzt werden können sind dem Fachmann allgemein bekannt und umfassen beispielsweise Schraubverbindungen, Hydrauliksysteme, oder alternative Kopplungsvorrichtungen. Die Arretiervorrichtung stellt den Vorteil bereit, dass die Verschubplatte 5 beim Verschieben des Schlittens 6 von der Verschubfläche 11 auf die Transportfläche 7 des Bergewagens 4 sicher mit dem Bergewagen 4 verbunden bleibt.

Vorzugsweise umfasst das erfindungsgemäße System eine mit dem Schlitten 6 verbundene Verschubvorrichtung, welche in den Figuren nicht dargestellt ist. Die Verschubvorrichtung verschiebt den Schlitten 6 von der Verschubfläche 11 auf die Transportfläche 7. Die Verschubvorrichtung kann beispielsweise ein mit dem Schlitten 6 verbundener Seilzug sein, oder ein oder mehrere Seile oder Ketten umfassen, welche mit dem Schlitten 6 verbunden sind und mittels eines Zugfahrzeugs manipuliert werden.

Gemäß der bevorzugten Ausführungsform des erfindungsgemäßen Systems gleitet der Schlitten 6 von der Verschubfläche 11 auf die Transportfläche 7. Vorzugsweise ist hierzu die Verschubfläche 11 und die Transportfläche 7 mit einem Schmiermittel versehen, wodurch die Reibung zwischen dem Schlitten 6 und der Verschubfläche 11 sowie der Transportfläche 7 reduziert werden. Gemäß alternativen Ausführungsvarianten des erfindungsgemäßen Systems sind entweder an dem Schlitten 6 oder der Transportfläche 7 und der Verschubfläche 11 Rollen, drehbaren Kugeln oder ähnliche Mittel vorgesehen, um die Reibung zwischen dem Schlitten 6 und der Verschubfläche 11 beziehungsweise der Transportfläche 7 beim Verschieben des Schlittens 6 von der Verschubfläche 11 auf die Transportfläche 7 zu reduzieren.

Gemäß der bevorzugten Ausführungsform umfasst das erfindungsgenmäße System eine an dem Schlitten 6 befestigbare Haltevorrichgung zum Fixieren des Rads 10 auf dem Schlitten 6, welche in den Figuren nicht dargestellt ist. Vorzugsweise umfasst die Haltevorrichtung zumindest einen Unterlegkeil. Der Unterlegkeil kann zudem zusätzlich am Schlitten 6 mittels einer Steck- oder Schraubverbindung gesichert sein. Hierdurch wird der Vorteil erreicht, dass das Fahrwerk 3 am Schlitten 6 beim Verschieben des Schlittens 6 gegen verrutschen gesichert ist.

Das erfindungsgemäße Verfahren zum Bergen eines Flugzeugs mit dem erfindungsgemäßen System umfasst als ersten Schritt ein Anheben zumindest einer Achse 2 des Fahrwerks 3 des Flugzeugs mit der Achsanhebevorrichgung 1. Im Anschluss wird die Verschubplatte 5 unter zumindest einem an der zumindest einen angehobenen Achse 2 angeordneten Rad 10 positioniert. Auf die Verschubfläche 11 der Verschubplatte 5 wird in weiterer Folge der Schlitten 6 angeordnet. Daraufhin wird mit der Achsanhebevorrichtung 1 die angehobene Achse 2 des Fahrwerks 3 abgesenkt, und das zumindest eine Rad 10 auf den Schlitten 6 abgelegt. Nach dem das zumindest eine Rad 10 auf dem Schlitten 6 abgelegt wurde wird der Schlitten 6 von der Verschubfläche 11 auf die Transportfläche 7 des Bergewagens 4 verschoben, was problemlos möglich ist, da die Verschubfläche 11 mit der Transportfläche 7 eine Ebene bildet, auf der der Schlitten 6 verschoben wird.

Ist mehr als ein Rad 10 des Fahrwerks 3 an verschiedenen Achsen 2 beschädigt, wird die von der Achsanhebevorrichtung 1 angehobene Achse 2 nach dem ersten Schritt auf den Unterstellbock abgelegt. Im Anschluss wird eine weitere Achse 2 des Fahrwerks 3 des Flugzeugs, an welcher ein Rad 10 beschädigt ist, mit der Achsanhebevorrichtung 1 angehoben. Nachdem die Verschubplatte 5 und der Schlitten 6 unter den beschädigten Rädern 10 positioniert wurden, wird zuerst die weitere Achse 2 mit der Achsanhebevorrichtung 1 abgesenkt und zumindest ein an dieser Achse 2 angeordnetes Rad 10 auf den Schlitten 6 abgelegt. In Anschluss wird mit der Achsanhebevorrichtung 1 die auf den Unterstellbock abgelegte Achse 2 angehoben. Daraufhin wird der Unterstellbock entfernt, die Achse 2 abgesenkt und zumindest ein an dieser Achse 2 angeordnetes Rad 10 auf den Schlitten 6 abgelegt. In weiterer Folge wird der Schlitten 6 wiederum von der Verschubfläche 11 auf die Transportfläche 7 des Bergewagens 4 verschoben.

## Patentansprüche

1. System zum Bergen eines Flugzeugs mit zumindest einem Bergewagen (4), welcher eine Transportfläche (7) zur Aufnahme eines Fahrwerks (3) des Flugzeugs aufweist, **dadurch gekennzeichnet, dass** das System zumindest eine Achsanhebevorrichtung (1), zumindest eine Verschubplatte (5) und zumindest einen Schlitten (6) umfasst, wobei die Achsanhebevorrichtung (1) zumindest ein anhebbares und absenkbares Lagerelement (8) zur höhenverstellbaren Aufnahme zumindest einer Achse (2) des Fahrwerks (3) aufweist, und die Verschubplatte (5) eine in Betriebslage im Wesentlichen in einer Ebene mit der und anschließend an die Transportfläche (7) des Bergewagens (4) angeordnete Verschubfläche (11) aufweist, wobei der Schlitten (6) zur Aufnahme zumindest eines an der von dem Lagerelement (8) der Achsanhebevorrichtung (1) aufgenommenen Achse (2) angeordneten Rads (10) ausgebildet, und von der Verschubfläche (11) der Verschubplatte (5) auf die Transportfläche (7) des Bergewagens (4) verschiebbar ist.

2. System gemäß Anspruch 1, **dadurch gekennzeichnet, dass** das System zumindest einen Unterstellbock zur Aufnahme der Achse (2) des Fahrwerks (3) umfasst.

3. System gemäß einem der Ansprüche 1 oder 2, **dadurch gekennzeichnet, dass** das System eine Arretiervorrichtung zum Arretieren der Verschubplatte (5) an dem Bergewagen (4) in der Betriebslage aufweist.

4. System gemäß Anspruch 3, **dadurch gekennzeichnet, dass** die Arretiervorrichtung zumindest einen mit der Verschubplatte (5) und dem Bergewagen (4) verbundenen Seilzug umfasst.

5. System gemäß einem der Ansprüche 1 bis 4, **dadurch gekennzeichnet, dass** das System eine mit dem Schlitten (6) verbundene Verschubvorrichtung umfasst, wobei die Verschubvorrichtung dazu ausgebildet ist, den Schlitten (6) von der Verschubfläche (11) auf die Transportfläche (7) zu verschieben.

6. System gemäß Anspruch 5, **dadurch gekennzeichnet, dass** die Verschubvorrichung ein mit dem Schlitten (6) verbundenes Seil umfasst.

7. System gemäß Anspruch 5, **dadurch gekennzeichnet, dass** die Verschubvorrichtung einen mit dem Schlitten (6) verbundenen Seilzug umfasst.

8. System gemäß einem der Ansprüche 1 bis 7, **dadurch gekennzeichnet, dass** der Schlitten (6) dazu ausgebildet ist, von der Verschubfläche (11) auf die Transportfläche (7) zu gleiten.

9. System gemäß einem der Ansprüche 1 bis 7, **dadurch gekennzeichnet, dass** der Schlitten (6) Rollen zur Verschiebung des Schlittens (6) von der Verschubfläche (11) auf die Transportfläche (7) aufweist.

10. System gemäß einem der Ansprüche 1 bis 9, **dadurch gekennzeichnet, dass** das System zwei Achsanhebevorrichtungen (1) umfasst.

11. System gemäß einem der Ansprüche 1 bis 10, **dadurch gekennzeichnet, dass** das System zumindest eine an dem Schlitten (6) befestigbare Haltevorrichtung zum Fixieren des Rads (10) auf dem Schlitten (6) umfasst.

12. System gemäß Anspruch 11, **dadurch gekennzeichnet, dass** die Haltevorrichtung zumindest einen Unterlegkeil umfasst.

13. System gemäß einem der Ansprüche 1 bis 12, **dadurch gekennzeichnet, dass** das Lagerelement (8) zwei Auflageketten (9) umfasst.

14. System gemäß einem der Ansprüche 1 bis 13, **dadurch gekennzeichnet, dass** die Achsanhebevorrichung (1) zumindest einen mit dem Lagerelement (8) verbundenen Aktor umfasst, welcher dazu ausgebildet ist das Lagerelement (8) anzuheben und abzusenken.

15. System gemäß Anspruch 14, **dadurch gekennzeichnet, dass** der Aktor ein Hydraulik- oder Pneumatikzylinder ist.

16. System gemäß einem der Ansprüche 1 bis 15, **dadurch gekennzeichnet, dass** das System zwei Verschubplatten (5) und zwei Schlitten (6) umfasst, wobei die Verschubplatten (5) beabstandet voneinander angeordnet sind.

17. System gemäß einem der Ansprüche 1 bis 16, **dadurch gekennzeichnet, dass** der Bergewagen (4) eine mit der Transportfläche (7) verbundene Nivelliervorrichtung zum Anheben und Absenken der Transportfläche (7) aufweist.

18. Verfahren zum Bergen eines Flugzeugs mit einem System gemäß einem der Ansprüche 1 bis 17, umfassend die Schritte:
a) Anheben zumindest einer Achse (2) eines Fahrwerks (3) eines Flugzeugs mit der Achsanhebevorrichtung (1);
b) Positionieren der Verschubplatte (5) unter zumindest einem, an der zumindest einen angehobenen Achse (2), angeordnetem Rad (10);
c) Positionieren des Schlittens (6) auf der Verschubfläche (11) der Verschubplatte (5);
d) Absenken der angehobenen Achse (2) des Fahrwerks (3) und Ablegen des zumindest einen Rads (10) auf den Schlitten (6) mit der Achsanhebevorrichtung (1);
e) Verschieben des Schlittens (6) von der Verschubfläche (11) auf die Transportfläche (7) des Bergewagens (4).

19. Verfahren zum Bergen eines Flugzeugs gemäß Anspruch 18 umfassend die Schritte:
f) Nach Schritt a) und vor Schritt b):
Ablegen der angehobenen Achse (2) des Fahrwerks (3) auf den Unterstellbock, und
Anheben einer weiteren Achse (2) des Fahrwerks (3) des Flugzeugs mit der Achsanhebevorrichtung (1);
g) Nach Schritt c) und vor Schritt d)
Absenken der weiteren Achse (2) und Ablegen zumindest eines an der weiteren Achse angeordneten Rads (10) auf den Schlitten (6), und
Anheben der auf dem Unterstellbock abgelegten Achse (2) mit der Achsanhebevorrichtung (1).

## Claims

1. A system for recovering an aircraft using at least one recovering dolley (4), which has a transport platform (7) for accommodating a landing gear (3) of the aircraft,
**characterized in that** the system comprises at least one axle lifting device (1), at least one shifting plate (5) and at least one carriage (6), wherein the axle lifting device (1) has at least one bearing element (8) that may be lifted and lowered for the accommodation adjustable in height of at least one axle (2) of the landing gear (3) and wherein the shifting plate (5) has a shifting platform (11) arranged in the operational position essentially on the same level with and adjacent to the transport platform (7) of the recovering dolly (4), wherein the carriage (6) is configured to accommodate at least one wheel (10) arranged at an axle (2) accommodated by the bearing element (8) of the axle lifting device (1) and may be shifted from the shifting platform (11) of the shifting plate (5) onto the transport platform (7) of the recovering dolly (4).

2. A system according to claim 1, **characterized in that** the system comprises at least one support frame for accommodating the axle (2) of the landing gear (3).

3. A system according to any of the claims 1 or 2, **characterized in that** the system has a locking device for locking the shifting plate (5) to the recovery dolly (4) in the operational position.

4. A system according to claim 3, **characterized in that** the locking device comprises a pulley connected to the shifting plate (5) and the recovery dolly (4).

5. A system according to any of the claims 1 to 4, **characterized in that** the system comprises a shifting device connected to the carriage (6), wherein the shifting device is configured to shift the carriage (6) from the shifting platform (11) onto the transport platform (7).

6. A system according to claim 5, **characterized in that** the shifting device comprises a rope connected to the carriage (6).

7. A system according to claim 5, **characterized in that** the shifting device comprises a pulley connected to the carriage (6).

8. A system according to any of the claims 1 to 7, **characterized in that** the carriage (6) is configured to slide from the shifting platform (11) onto the transport platform (7).

9. A system according to any of the claims 1 to 7, **characterized in that** the carriage (6) has rollers for shifting the carriage (6) from the shifting platform (11) onto the transport platform (7).

10. A system according to any of the claims 1 to 9, **characterized in that** the system comprises two axle lifting devices (1).

11. A system according to any of the claims 1 to 10, **characterized in that** the system comprises at least one holding device attachable to the carriage (6) for fixing the wheel (10) at the carriage (6).

12. A system according to claim 11, **characterized in that** the holding device comprises at least one wheel chock.

13. A system according to any of the claims 1 to 12, **characterized in that** the bearing element (8) comprises two supporting chains (9).

14. A system according to any of the claims 1 to 13, **characterized in that** the axle lifting device (1) comprises at least one actor connected to the bearing element (8), which is configured to lift and lower the bearing element (8).

15. A system according to claim 14, **characterized in that** the actor is a hydraulic or pneumatic cylinder.

16. A system according to any of the claims 1 to 15, **characterized in that** the system comprises two shifting plates (5) and two carriages (6), wherein the shifting plates (5) are arranged spaced apart from one another.

17. A system according to any of the claims 1 to 16, **characterized in that** the recovery dolley (4) has a levelling device connected to the transport platform (7) for lifting and lowering the transport platform (7).

18. A method for recovering an aircraft using a system according to any of the claims 1 to 17, comprising the following steps of:
a) lifting at least one axle (2) of a landing gear (3) of an aircraft using an axle lifting device (1),
b) positioning the shifting plate (5) underneath at least one wheel (10) arranged at the at least one lifted axle (2);
c) positioning the carriage (6) on the shifting platform (11) of the shifting plate (5),
d) lowering the lifted axle (2) of the landing gear (3) and resting the at least one wheel (10) on the carriage (6) using the axle lifting device (1);
e) shifting the carriage (6) from the shifting platform (11) onto the transport platform (7) of the recovery dolly (4).

19. A method for recovering an aircraft according to claim 18, comprising the following steps of:
f) following step a) and before step b):
resting the lifted axle (2) of the landing gear (3) on the support frame and lifting a further axle (2) of the landing gear (3) of the aircraft using the axle lifting device (1);
g) following step c) and before step d):
lowering the further axle (2) and resting at least one wheel (10) arranged at the further axle on the carriage (6) and
lifting the axle (2) rested on the support frame using the axle lifting device (1).

## Revendications

1. Système de sauvetage d'un aéronef avec au moins une voiture de sauvetage (4) qui présente une surface de transport (7) pour recevoir un train d'atterrissage (3) de l'aéronef, **caractérisé en ce que** ce système comprend au moins un dispositif de levage d'essieu (1), au moins une plaque de glissement (5) et au moins un chariot (6), dans lequel le dispositif de levage d'essieu (1) présente au moins un élément porteur (8) pouvant être soulevé et abaissé pour recevoir de manière réglable en hauteur au moins un essieu (2) du train d'atterrissage (3), et la plaque de glissement (5) présente une surface de glissement (11) disposée sensiblement, en position d'utilisation, dans le même plan et à la suite de la surface de transport (7) de la voiture de sauvetage (4), et dans lequel le chariot (6) est conçu pour recevoir au moins une roue (10) montée sur l'essieu (2) reçu par l'élément porteur (8) du dispositif de levage d'essieu (1), et peut glisser de la surface de glissement (11) de la plaque de glissement (5) à la surface de transport de la voiture de sauvetage (4).

2. Système selon la revendication 1, **caractérisé en ce que** ce système comprend au moins une chandelle pour recevoir l'essieu (2) du train d'atterrissage (3).

3. Système selon une des revendications 1 ou 2, **caractérisé en ce que** ce système présente un dispositif de verrouillage pour verrouiller la plaque de glissement (5) sur la voiture de sauvetage (4) en position d'utilisation.

4. Système selon la revendication 3, **caractérisé en ce que** le dispositif de verrouillage comprend au moins un palan à câble relié à la plaque de glissement (5) et à la voiture de sauvetage (4).

5. Système selon une des revendications 1 à 4, **caractérisé en ce que** ce système comprend un dispositif de glissement relié au chariot (6), lequel dispositif de glissement est configuré pour faire glisser le chariot (6) de la surface de glissement (11) à la surface de transport (7).

6. Système selon la revendication 5, **caractérisé en ce que** le dispositif de glissement comprend un câble relié au chariot (6).

7. Système selon la revendication 5, **caractérisé en ce que** le dispositif de glissement comprend un palan à câble relié au chariot (6).

8. Système selon une des revendications 1 à 7, **caractérisé en ce que** le chariot (6) est configuré pour glisser de la surface de glissement (11) sur la surface de transport (7).

9. Système selon une des revendications 1 à 7, **caractérisé en ce que** le chariot (6) présente des galets pour faire glisser le chariot (6) de la surface de glissement (11) sur la surface de transport (7).

10. Système selon une des revendications 1 à 9, **caractérisé en ce que** ce système comprend deux dispositifs de levage d'essieu (1).

11. Système selon une des revendications 1 à 10, **caractérisé en ce que** ce système comprend au moins un dispositif de maintien pouvant être fixé au chariot (6) pour fixer la roue (10) sur le chariot (6).

12. Système selon la revendication 11, **caractérisé en ce que** le dispositif de maintien comprend au moins une cale.

13. Système selon une des revendications 1 à 12, **caractérisé en ce que** l'élément porteur (8) comprend deux chaînes de support (9).

14. Système selon une des revendications 1 à 13, **caractérisé en ce que** le dispositif de levage d'essieu (1) comprend au moins un actionneur raccordé à l'élément porteur (8) qui est configuré pour lever et abaisser l'élément porteur (8).

15. Système selon la revendication 14, **caractérisé en ce que** l'actionneur est un vérin hydraulique ou pneumatique.

16. Système selon une des revendications 1 à 15, **caractérisé en ce que** ce système comprend deux plaques de glissement (5) et deux chariots (6), lesquelles plaques de glissement (5) sont disposées à distance l'une de l'autre.

17. Système selon une des revendications 1 à 16, **caractérisé en ce que** la voiture de sauvetage (4) présente un dispositif de mise à niveau raccordé à la surface de transport (7) pour lever et abaisser la surface de transport (7).

18. Procédé de sauvetage d'un aéronef avec un système selon les revendications 1 à 17, comprenant les étapes suivantes :
a) levage d'au moins un essieu (2) d'un train d'atterrissage (3) d'un aéronef avec le dispositif de levage d'essieu (1),
b) positionnement de la plaque de glissement (5) sous au moins une roue (10) montée sur au moins un essieu (2) levé,
c) positionnement du chariot (6) sur la surface de glissement (11) de la plaque de glissement (5),
d) abaissement de l'essieu (2) levé du train d'atterrissage (3) et dépôt de l'au moins une roue (10) sur le chariot (6) avec le dispositif de levage d'essieu (1) et
e) glissement du chariot (6) de la surface de glissement (11) sur la surface de transport (7) de la voiture de sauvetage (4).

19. Procédé de sauvetage d'un aéronef selon la revendication 18 comprenant les étapes suivantes :
f) après l'étape a) et avant l'étape b) :
dépôt de l'essieu (2) levé du train d'atterrissage (3) sur la chandelle et
levage d'un autre essieu (2) du train d'atterrissage (3) de l'aéronef avec le dispositif de levage d'essieu (1) et
g) après l'étape c) et avant l'étape d) :
abaissement de l'autre essieu (2) et dépôt d'au moins une roue (10) montée sur l'autre essieu sur le chariot et
levage de l'essieu (2) déposé sur la chandelle avec le dispositif de levage d'essieu (1).
